# FASCICULE DE BREVET EUROPEEN

(11) **EP 1 890 663 B1**
(45) Date de publication et mention de la délivrance du brevet: **17.11.2010**
(21) Numéro de dépôt: 06764758.6
(22) Date de dépôt: 09.06.2006
(51) Int. Cl.: A61G 3/00, B64D 11/00

(54) **BLOC MEDICAL POUR UNE CABINE D'AERONEF ASSOCIE A UNE COUCHETTE**
ÄRZTLICHE ABTEILUNG FÜR DEN PASSAGIERRAUM EINES FLUGZEUGS IN VERBINDUNG MIT EINEM LIEGEABTEIL
MEDICAL BLOCK FOR THE CABIN OF AN AIRCRAFT, ASSOCIATED WITH A COUCHETTE

(30) Priorité: 16.06.2005 FR 0506132
(43) Date de publication de la demande: 27.02.2008
(73) Titulaire: Airbus, 31700 Blagnac Cédex (FR)
(72) Inventeur: SAINT-JALMES, Bruno, F-31400 Toulouse (FR); REZAG, André, F-31200 Toulouse (FR); ZANEBONI, Jason, F-31700 Blagnac (FR)
(74) Mandataire: Hartmann, Jean-Luc
(86) Numéro de dépôt international: PCT/FR2006/001306
(87) Numéro de publication internationale: WO 2006/134252

(56) Documents cités:
- EP-A- 0 965 319
- EP-A- 1 138 304
- FR-A- 2 426 608
- US-A- 4 458 864
- US-A- 5 083 727
- US-A1- 2005 001 097
- US-B2- 6 691 952

## Description

La présente invention concerne un bloc médical destiné à être aménagé dans une cabine d'avion ou d'un autre aéronef, et permettant de fournir des soins médicaux de haute qualité à un passager pendant un vol.

Les vols commerciaux sont capables de transporter un nombre de passagers de plus en plus élevé sur des durées de plus en plus longues. De plus en plus de personnes âgées sont aussi amenées à prendre l'avion. Il arrive donc de plus en plus souvent qu'un passager soit victime d'un malaise ou d'une blessure durant un vol. Lorsqu'il s'agit d'un malaise grave, les chances de survie du passager sont d'autant plus grandes que des premiers soins lui sont prodigués rapidement. Il convient donc de prévoir à bord même de l'avion des moyens permettant de porter des premiers secours à la victime.

On connaît, d'après le brevet US-6,691,952 qui montre toutes les caractéristiques de préambule de la revendication 1, un dispositif pouvant être mis en place durant le vol pour apporter des soins de premier secours à un passager. Hors utilisation, le dispositif selon US-6,691,952 est constitué d'une armoire instillée dans une cloison disposée transversalement dans une cabine d'avion, devant une rangée de sièges. Ce dispositif n'occupe alors, avantageusement, qu'un espace assez réduit dans la cabine. L'armoire contient une couchette repliée, ainsi que des compartiments contenant divers accessoires de diagnostic et de soins médicaux. Pour mettre en place la couchette, on ouvre l'armoire et on la déploie au-dessus de deux rangées de sièges dont le dossier a été rabattu. La couchette repose alors sur un support prévu dans l'armoire et sur un piètement prévu à cet effet, articulé sur la couchette et rangé initialement dans l'armoire.

Un dispositif selon US-6,691,952 présente plusieurs inconvénients. D'une part, l'agencement est tel qu'il ne permet qu'un très mauvais accès à la victime et à une partie au moins du matériel médical logé dans ce dispositif. Il n'est ainsi par exemple pas possible de se tenir face au patient du côté de la tête du patient. D'autre part, les soins qui peuvent alors être prodigués sont très limités. Il est en effet difficile, voire impossible, d'administrer des soins médicaux complexes à une victime prenant place sur la couchette décrite dans ce document.

La présente invention a pour but de fournir un bloc médical qui puisse être utilisé tant pour des malades ayant un malaise passager et devant simplement s'allonger dans une ambiance calme que pour des malades victimes d'attaques graves et dont la vie est en danger. On distingue généralement plusieurs niveaux de performance médicale pour un poste de secours. Selon un premier niveau, des traitements de type "secourisme" sont permis. Un second niveau prévoit des diagnostics et des traitements relevant de la médecine générale. Enfin le troisième niveau concerne les diagnostics et les traitements concernant la médecine d'urgence. De préférence, un bloc médical selon l'invention peut s'adapter à chacun de ces niveaux de performance médicale.

Le bloc médical selon l'invention est destiné à être utilisé dans le cas où un passager tombe malade au cours d'un vol mais doit de préférence également pouvoir être utilisé pour réaliser une évacuation sanitaire. Ce bloc médical prévoit donc avantageusement une grande sécurité médicale et permet de préférence l'isolement du patient.

Il convient toutefois ici de respecter les contraintes commerciales des compagnies aériennes. Ainsi, l'espace occupé par le bloc médical, lorsque celui-ci n'est pas utilisé, doit être aussi restreint que possible. De préférence, ce bloc médical peut s'adapter à différentes zones de l'aéronef dans lequel il est installé.

Un bloc médical selon l'invention doit, de préférence, être également évolutif de manière à pouvoir s'adapter à de nouvelles technologies.

La présente invention propose alors un bloc médical pour cabine d'aéronef associé à une couchette destinée à recevoir un patient en position allongée.

Selon l'invention , telle que défini par la revendication 1, ce bloc médical comporte :
- une alimentation en eau,
- une alimentation électrique,
- une zone de stationnement pour au moins un chariot,
- au moins un chariot disposé dans la zone de stationnement et comportant des tiroirs dans lesquels se trouve du matériel médical, et
- un volet d'accès correspondant à chaque chariot, muni de moyens de verrouillage, et permettant l'accès aux tiroirs de celui-ci, et
- Une porte d'accès distincte des volets d'accès permettant de faire rentrer et sortir un chariot de sa zone de stationement.

Un tel bloc médical présente l'avantage de pouvoir être très compact. Il peut n'être à peine plus large que le (ou les) chariot(s) qu'il reçoit. Lorsqu'il est inutilisé, chaque volet est fermé et il n'est pas possible à une personne non autorisée d'accéder au matériel médical contenu dans le bloc médical. L'espace autour du bloc peut être alors utilisé normalement pour accueillir des passagers. Lorsqu'un passager a un problème de santé, une personne habilitée peut prendre un chariot et se rendre à côté de la personne. Elle dispose dans le chariot du matériel nécessaire pour les premiers soins. Si nécessaire, le passager est alors transporté et allongé sur la couchette associée au bloc médical. Cette couchette est disposée alors dans l'espace prévu pour accueillir normalement des passagers. Si des passagers occupent cet espace, ils sont déplacés vers des places libres. Ainsi, l'espace dédié au bloc médical est très restreint et en cas de besoin, l'espace nécessaire pour prodiguer des soins est gagné sur la place recevant habituellement des passagers et est suffisante pour apporter au patient les soins dont il a besoin. Le fait de prévoir au moins un chariot permet aussi de rendre une partie du bloc médical mobile.

Dans une forme de réalisation de l'invention, chaque volet d'accès permet l'accès aux tiroirs du chariot correspondant depuis par exemple une zone destinée à recevoir des passagers. Bien entendu, il s'agit de préférence de la zone destinée à recevoir un patient sur la couchette associée au bloc médical. Dans cette forme de réalisation, pour éviter que le(s) chariot(s) puisse(nt) rouler vers la zone destinée à recevoir des passagers, le bloc médical selon l'invention présente avantageusement des moyens de retenue empêchant un chariot de se déplacer vers la zone voisine destinée à recevoir des passagers. Ces moyens de retenue comportent par exemple un bandeau inférieur et un bandeau supérieur entre lesquels se trouve le volet d'accès correspondant.

Selon une variante de réalisation préférée, selon laquelle l'espace occupé par le bloc médical selon l'invention est optimisé, ledit bloc médical est délimité de préférence d'une part par deux parois s'étendant transversalement dans la cabine d'aéronef et d'autre part par une paroi longitudinale et une paroi de cabine, et en ce que chaque volet est réalisé dans une paroi transversale.

Pour pouvoir être utilisé dans de bonnes conditions d'hygiène, le bloc médical selon l'invention comporte avantageusement un point d'eau tel un lavabo. Il peut également comporter un plan de travail permettant de déposer du matériel médical sorti hors des zones de rangement du bloc médical. Ce plan de travail se trouve avantageusement au-dessus de la zone de stationnement des chariots pour une optimisation de l'espace dans le bloc médical.

Un bloc médical selon l'invention comporte également de préférence une alimentation en oxygène. Il peut s'agir d'une alimentation à partir des systèmes de l'aéronef ou bien à partir de bouteilles d'oxygène.

Pour aller chercher le patient dans l'aéronef, le bloc médical comporte avantageusement en outre un brancard. Ce dernier peut par la suite être utilisé comme couchette pour recevoir le patient ou bien le patient peut être transféré de façon connue du brancard sur la couchette.

Lorsqu'un brancard est prévu, on prévoit de préférence également au moins deux chariots, et lesdits chariots et le brancard sont avantageusement munis de moyens de fixation de telle sorte que les deux extrémités du brancard puissent être fixées chacune sur un chariot.

Pour augmenter la capacité de rangement de matériel médical, le bloc médical comporte avantageusement des casiers de rangement destinés à recevoir des appareils médicaux. Il peut aussi être équipé par exemple d'au moins un éclairage scialytique, d'au moins une tablette rétractable et d'un appareil téléphonique ou similaire permettant d'être en contact avec un médecin au sol pour permettre de réaliser de la télémédecine.

La présente invention concerne également une cabine d'aéronef, **caractérisée en ce qu**'elle comporte un bloc médical tel que décrit ci-dessus.

Dans une forme de réalisation préférée, une telle cabine d'aéronef comporte de préférence également un module de cabine d'aéronef de forme rectangulaire allongée avec :
- deux grandes parois reliées par deux petites parois,
- une porte montée dans une ouverture réalisée dans une paroi séparant le module d'un couloir,
- au moins un siège ayant au moins une configuration dans laquelle il est orienté longitudinalement par rapport au sens de déplacement de l'aéronef, et
- des éléments pouvant former une surface de couchage pour au moins un passager.

Le bloc médical et le module de cabine d'aéronef ont alors avantageusement une paroi commune, et les volets d'accès du bloc médical permettent l'accès aux tiroirs des chariots correspondants depuis l'intérieur du module de cabine.

Dans une telle cabine d'aéronef, le bloc médical peut comporter par exemple un lavabo et/ou un plan de travail accessible en permanence depuis l'intérieur du module de cabine. Au-dessus de l'éventuel plan de travail, une vitre occultable peut être disposée. Cette vitre est occultée pendant toute la durée du vol et est transparente lors des phases de décollage et d'atterrissage de telle sorte que le personnel navigant commercial puisse, conformément à la réglementation, voir les passagers durant ces phases du vol.

La présente invention concerne enfin un aéronef, **caractérisé en ce qu**'il comporte un bloc médical et/ou une cabine d'aéronef tels que décrits ci-dessus.

Des détails et avantages de la présente invention ressortiront mieux de la description qui suit, faite en référence aux dessins schématiques annexés, sur lesquels :
- la figure 1 est une vue en plan d'un mode de réalisation préféré de l'invention,
- la figure 2 est une vue en plan de l'avant d'une cabine d'aéronef équipé d'un bloc médical selon l'invention lorsque ce dernier n'est pas utilisé,
- la figure 3 correspond à la vue de la figure 2 lorsque le bloc médical est utilisé,
- les figures 4 et 5 correspondent respectivement aux figures 2 et 3 pour une variante de réalisation d'un bloc médical selon l'invention,
- les figures 6 et 7 montrent un module de cabine selon l'invention en perspective, et
- la figure 8 est une vue de face d'une forme de réalisation préférée d'un bloc médical selon l'invention.

Toutes ces figures montrent quelques modes de réalisation d'un bloc médical selon l'invention. Différentes variantes de réalisation sont envisageables pour répondre aux besoins des compagnies aériennes. Comme indiqué au préambule ci-dessus, on distingue généralement trois niveaux d'intervention sur un patient. Selon un premier niveau, des soins de type secourisme sont donnés au patient. La vie du patient n'est ici pas en danger. Il est par exemple pris d'un malaise passager tel un malaise vagal. Selon un autre niveau d'intervention, le patient est atteint plus sérieusement et nécessite des soins de médecine générale. Il s'agit ici par exemple d'un patient souffrant de colique néphrétique. Selon le dernier niveau, la vie du patient est en danger et une intervention assez lourde est à envisager rapidement. Il s'agit par exemple d'un patient faisant une crise cardiaque.

Les compagnies aériennes peuvent choisir, si elles le désirent, pouvoir intervenir uniquement au premier niveau, ou encore au second niveau ou bien aux trois niveaux.

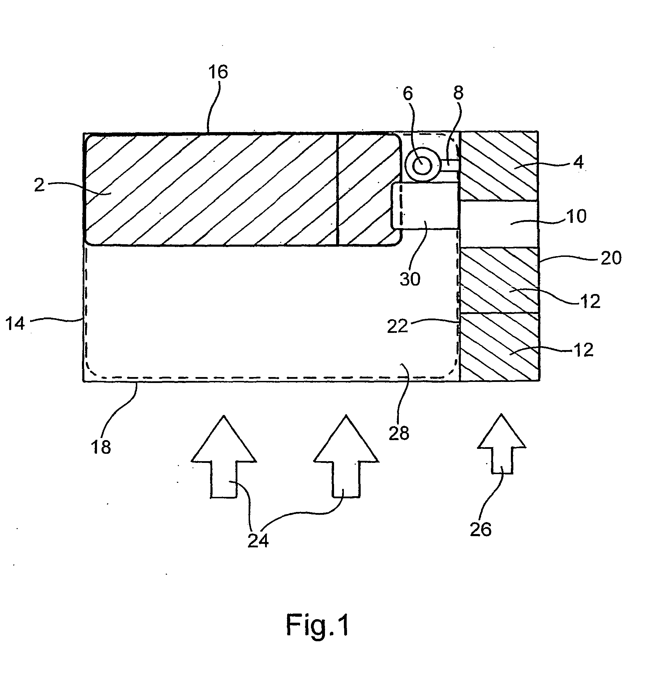

La figure 1 représente en plan un module médical pouvant prendre place dans un aéronef et destiné à prendre en charge un patient selon les trois niveaux d'intervention précités. On reconnaît tout d'abord sur ce plan une couchette 2. Du côté de la couchette 2 destiné à recevoir la tête d'un patient, des rangements sont prévus pour divers matériels. Un premier espace de rangement 4 formé par exemple de casiers fixes reçoit par exemple du matériel médical mobile tel par exemple des dispositifs de diagnostic (mesure de la tension, mesure du pouls, électrocardiogramme, ...) et aussi des dispositifs de traitement (masques à oxygène, seringues électriques, ...). Une alimentation électrique dans ce premier espace de rangement 4 permet de faire fonctionner tous ces appareils. La figure 1 représente également un dispositif d'éclairage direct mobile. Il s'agit par exemple d'un éclairage scialytique 6 monté sur un bras 8 articulé. Le bras 8 peut de préférence se replier et rentrer dans un casier du premier espace de rangement 4 avec l'éclairage scialytique 6.

Pour pouvoir intervenir sur un patient dans de bonnes conditions d'hygiène, il convient de prévoir un point d'eau. On a ainsi représenté sur la figure 1, à côté du premier espace de rangement 4, un lavabo 10. A côté de ce dernier, se trouvent deux espaces de rangement destinés à recevoir du matériel médical en kits et à usage unique. Il s'agit ici de deux chariots 12 reprenant la forme extérieure et les dimensions des chariots utilisés couramment dans les aéronefs, notamment pour le service des repas et des boissons et connus sous le nom de "trolley". Ces chariots 12 sont mobiles et comportent des tiroirs dans lesquels sont rangés le matériel médical.

Le module médical décrit ci-dessus est par exemple de forme sensiblement rectangulaire, comme représenté sur la figure 1. Il est délimité par exemple sur un côté par l'espace dans lequel est rangé le matériel médical et où se trouve le lavabo 10. Du côté opposé à cette zone de rangement, se trouve une paroi transversale 14. Dans l'exemple de la figure 1, la couchette 2 est disposée contre la paroi transversale 14 et contre une paroi longitudinale qui peut être constituée par une paroi de cabine 16. Du côté opposé à la paroi de cabine 16, se trouve une paroi longitudinale 18 séparant le module médical d'un couloir.

La zone de rangement du matériel médical est délimitée par deux faces transversales. Une première face transversale ou face transversale extérieure 20 est une paroi, par exemple sensiblement pleine. Il s'agit de préférence d'une paroi de séparation avec un local technique, tel une toilette, qui est alimenté en eau et en électricité. Une alimentation en air, et de préférence aussi en oxygène, est également prévue. Ces diverses alimentations traversent la face transversale extérieure 20 pour venir alimenter le module médical décrit ci-dessus. L'alimentation en oxygène peut être réalisée à partir d'une bouteille disposée dans le bloc médical, entre les deux faces transversales 20 et 22.

L'espace de rangement comporte également une face transversale intérieure 22. Cette dernière comporte de nombreuses ouvertures permettant d'accéder depuis le module médical aux divers matériels et appareils stockés dans l'espace de rangement. Tous les accès à ces matériels et appareils se font par des portes, volets, ou similaires, verrouillables. En ce qui concerne par contre le lavabo 10, on peut prévoir une ouverture dans la face transversale intérieure 22 autorisant un accès permanent au lavabo 10.

L'accès à la couchette 2 se fait par exemple depuis le couloir comme symbolisé par les flèches d'accès 24. Cet accès se fait par exemple par une porte (non représentée) réalisée dans la paroi longitudinale 18. Une autre porte (non représentée) permet l'accès depuis le couloir aux chariots 12. Cet accès est symbolisé par une troisième flèche 26.

Le module médical de la figure 1 permet ainsi d'intervenir sur un patient allongé sur la couchette 2. La personne intervenant sur ce patient bénéficie d'une zone de circulation 28 autour de la couchette 2 et a accès à tout le matériel rangé dans l'espace de rangement. Divers accessoires non décrits plus haut peuvent également être prévus. On peut ainsi par exemple, comme représenté sur la figure 1, prévoir une tablette mobile 30 entre une position sortie et une position rétractée à l'intérieur de l'espace de rangement.

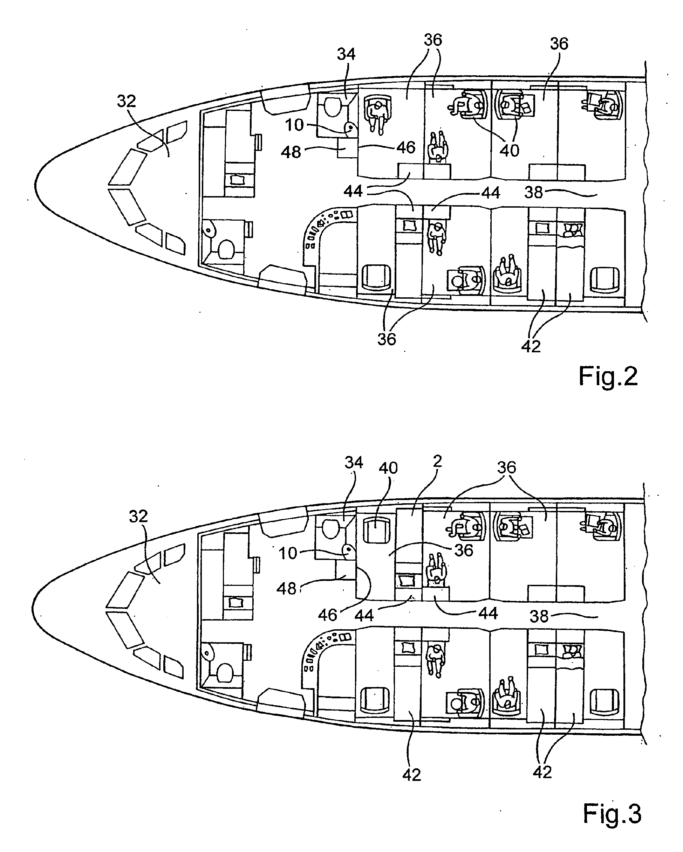

Les figures 2 et 3 illustrent la mise en place d'une première variante de réalisation d'un bloc médical selon l'invention dans une cabine d'aéronef. Il s'agit, dans cette première forme de réalisation, d'un bloc médical destiné à assurer uniquement des premiers soins de type secourisme.

On reconnaît sur ces figures un cockpit 32, auquel sont associés une cabine et une toilette pour l'équipage ainsi qu'une partie de cabine d'aéronef. Dans cette cabine, se trouve du côté de l'entrée une toilette 34, ainsi que des modules 36 destinés à recevoir des passagers. Les modules 36 sont disposés de part et d'autre d'un couloir 38. Chaque module dispose d'un fauteuil 40 et d'une couchette 42. La couchette 42 peut se replier dans un coffre 44 ménagé dans chaque module 36 le long d'une paroi de celui-ci.

Un module 36 est disposé à côté de la toilette 34. Une paroi de séparation 46 sépare ce module 36 de la toilette 34. Contre cette paroi de séparation 46, à l'extérieur du module 36, se trouve un compartiment 48 s'étendant par exemple sur toute la hauteur de la cabine d'aéronef. Dans sa partie inférieure, du côté du sol de la cabine, ce compartiment 48 est adapté pour recevoir un chariot tels les chariots 12 de la figure 1. Il s'agit ici d'un chariot reprenant les dimensions d'un chariot utilisé pour le service à bord de l'aéronef. De par ses dimensions, il s'agit d'un chariot appelé "demi trolley". Ce chariot peut être mis en place dans le compartiment 48 depuis le couloir 38. Le chariot disposé à l'intérieur du compartiment 48 contient du matériel médical rangé dans des tiroirs. Un volet verrouillable (non représenté sur les figures 2 et 3) est réalisé dans la paroi de séparation 46 de manière à pouvoir accéder aux tiroirs du chariot placé dans le compartiment 48. Bien entendu, ce chariot est disposé de manière adéquate dans le compartiment 48.

Le chariot n'occupe pas toute la place du compartiment 48 mais uniquement la partie inférieure de celui-ci. Dans la partie supérieure de celui-ci, des casiers sont aménagés pour recevoir du matériel médical. On accède à ces casiers depuis l'intérieur du module 36 par l'intermédiaire d'un volet lui aussi verrouillable.

La paroi de séparation 46 comporte également une ouverture permettant l'accès au lavabo 10 de la toilette 34.

Pour éviter d'avoir à ouvrir séparément l'accès au chariot disposé dans le compartiment 48, puis l'accès aux casiers de ce même compartiment, puis au lavabo 10, on peut prévoir une porte coulissant le long de la paroi de séparation 46 entre une position où tous les accès au matériel médical et au lavabo sont ouverts et une position, dans laquelle la porte coulissante peut être verrouillée, et dans laquelle tous les accès aux matériels médicaux sont fermés.

Il est également prévu à partir de la toilette 34 d'alimenter le compartiment 48 en électricité.

La figure 2 représente la cabine de l'aéronef dans des conditions d'utilisation normale. Un passager a pris place dans le fauteuil 40 du module 36 disposé à côté de la toilette 34. Sur la figure 3, le module 36 situé à côté de la toilette 34 est transformé en module médical prêt à recevoir un patient. On remarque alors, par rapport à la figure 2, que le lit du module 36 a été déployé pour former une couchette 2. Les accès au compartiment 48, depuis l'intérieur du module 36, sont ouverts. La couchette 2 est prête à recevoir un patient qui pourra être pris en charge au sein du module 36. Le patient se trouve alors au calme, séparé des autres passagers et les premiers soins peuvent lui être prodigués dans de bonnes conditions.

On remarque dans cette variante des figures 2 et 3 que le volume du compartiment 48 est restreint. De ce fait, le matériel médical emporté est limité et le module médical réalisé est destiné à recevoir plus particulièrement des patients nécessitant des soins de type secourisme.

Il est toutefois également possible de compléter l'équipement du module 36. On peut alors prévoir de loger du matériel médical dans le coffre 44 recevant la couchette lorsque celle-ci est rangée. Selon le matériel logé dans le coffre 44, le module médical réalisé peut alors également être adapté pour y fournir des soins relevant de la médecine générale et/ou des urgences (niveaux 2 et/ou 3).

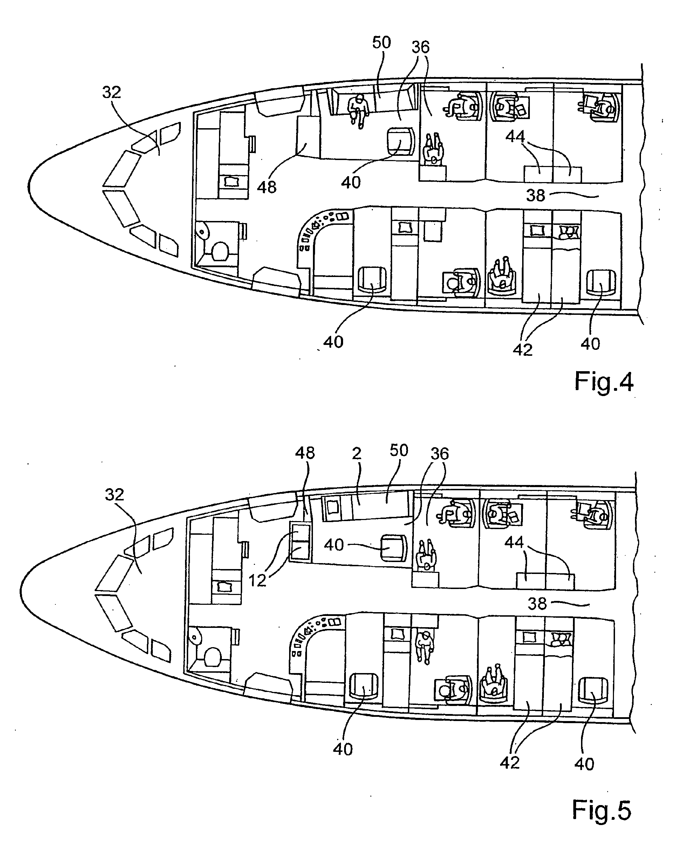

Les figures 4 et 5 montrent une seconde forme de réalisation d'un bloc médical selon l'invention. Pour des éléments similaires, on utilise sur ces figures les mêmes références que celles utilisées précédemment en référence aux figures 1 à 3.

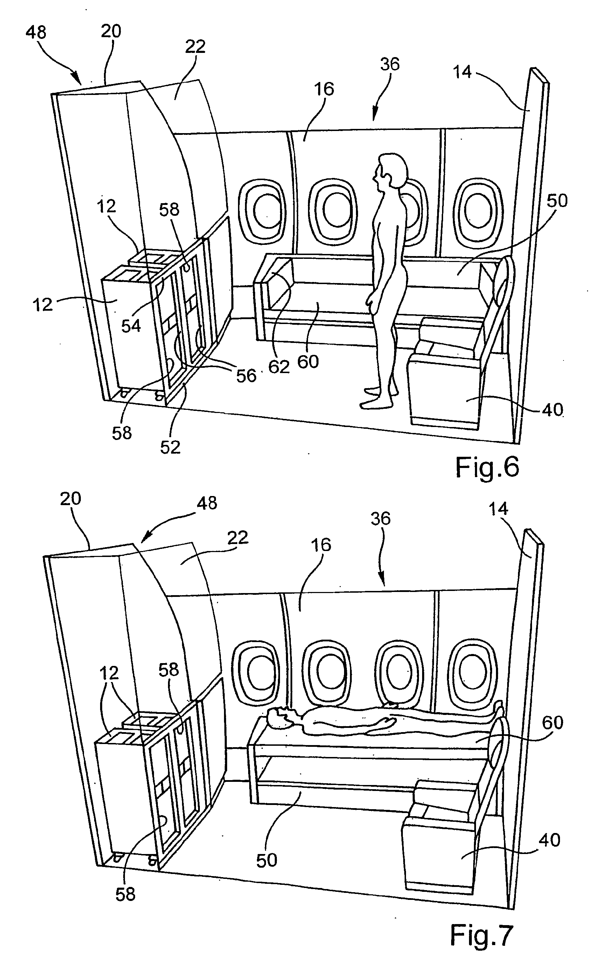

On reconnaît sur ces figures le cockpit 32 d'un aéronef ainsi que des modules 36 desservis par un couloir 38. On remarque un module d'une configuration un peu particulière puisqu'il présente une banquette 50 (figure 4). Ce module est destiné ici à être utilisé éventuellement comme module médical. Ce module peut être utilisé pour un transport de passagers comme cabine de première classe. Le passager bénéficie à l'intérieur de cette cabine d'un fauteuil 40 et de la banquette 50 qui peut être convertie en lit. Cette cabine est disposée vers l'avant de l'avion et est accolée à un compartiment 48. Ce compartiment est ici dimensionné pour recevoir deux demi trolleys dans lesquels sont rangés du matériel médical ainsi que des appareils médicaux et un lavabo. Le compartiment 48 est alimenté en eau, en électricité et en oxygène. Les figures 6 et 7 montrent en perspective ce compartiment 48 et le module 36 correspondant. La figure 6 correspond à la configuration de la figure 4 et la figure 7 à celle de la figure 5.

On remarque bien sur les figures 6 et 7 que les chariots 12 rangés dans le compartiment 48 font face à l'intérieur de la cabine 36 à laquelle ils sont associés. Il convient de maintenir ces chariots dans le compartiment 48 même en cas de choc violent. Pour maintenir ces chariots 12, on prévoit du côté de la cabine 36 un bandeau inférieur 52 et un bandeau supérieur 54. Ces bandeaux sont renforcés pour retenir, même en cas de choc violent, les chariots 12 à l'intérieur du compartiment 48. Entre ces bandeaux 52 et 54, se trouvent deux volets 56 permettant de fermer l'accès au chariot 12 depuis l'intérieur du module 36 correspondant. Sur les figures 6 et 7, les volets sont représentés en position ouverte. Ils libèrent ainsi une ouverture 58 permettant l'accès au tiroir des chariots 12. Pour passer de leur position fermée à leur position ouverte, les volets 56 pivotent de 90° autour d'un axe vertical et sont ensuite coulissés pour venir prendre place à côté du chariot 12 correspondant dans le compartiment 48.

Sur les figures 6 et 7, on remarque que la banquette 50 comporte une structure sur laquelle sont disposés d'une part une assise 60 et d'autre part des coussins 62 formant les accoudoirs et le dossier de cette banquette 50. L'assise 60 de la banquette 50 peut être utilisée comme brancard. Avantageusement, pour aller chercher un patient dans l'aéronef, l'assise 60 est retirée de la banquette 50 et est disposée sur les deux chariots 12 rangés dans le compartiment 48. On a alors un chariot à la tête du brancard formé par l'assise 60 et un autre chariot 12 sous l'autre extrémité de ce brancard. Des moyens de fixation (non représentés) permettent de maintenir le brancard sur les chariots 12. Le patient peut ainsi être transporté en toute sécurité. En outre, on dispose sur place de matériel médical (celui se trouvant dans les chariots 12) et celui-ci peut être utilisé pour des premiers soins, avant même le transport du passager souffrant.

En fonction de la hauteur des chariots 12 et de celle des sièges, et autres obstacles se trouvant dans la cabine de l'aéronef, une pièce intermédiaire peut être prévue entre chaque chariot 12 et le brancard pour surélever ce dernier. Ainsi, la circulation avec le brancard dans l'aéronef est facilitée.

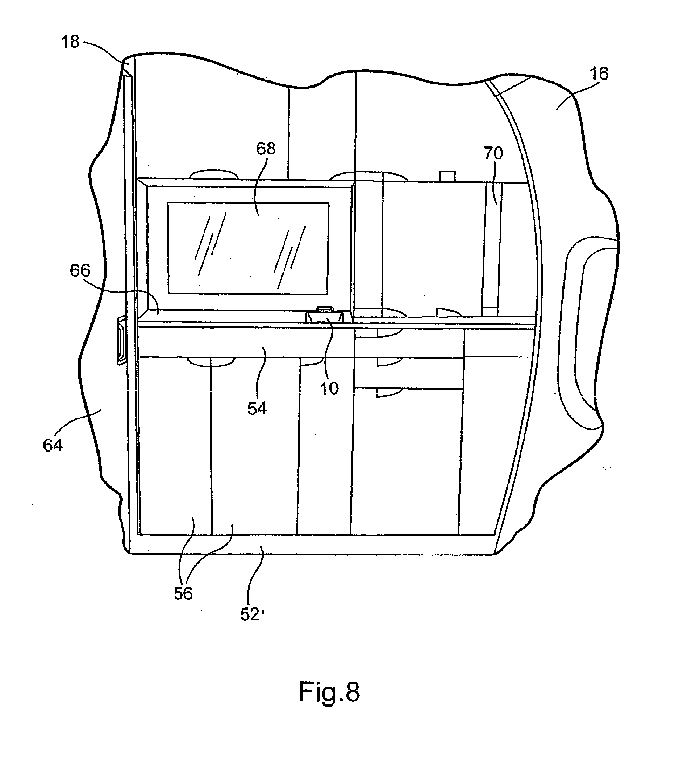

La figure 8 montre en vue de face un bloc médical vu depuis une cabine 36 telle la cabine des figures 4 à 7. On reconnaît ici les volets 56 permettant d'accéder aux chariots 12 (cachés sur la figure 8), les bandeaux inférieur 52 et supérieur 54 empêchant les chariots de sortir de leur compartiment, ainsi que divers autres équipements tels le lavabo 10. Sur la droite de la figure 8, on reconnaît la paroi de cabine 16 et à gauche une porte 64 permettant d'accéder depuis un couloir dans le module.

A côté du lavabo 10, se trouve un plan de travail 66. Ce dernier se trouve ainsi disposé au dessus des chariots se trouvant dans le compartiment 48. Sous le lavabo 10, une poubelle est prévue. Derrière le plan de travail, on prévoit une vitre 68 qui peut être occultée. Ainsi, pendant les phases d'atterrissage et de décollage le personnel navigant peut voir ce qui se passe à l'intérieur du module. En effet, les normes prévoient que le personnel navigant doit voir lors de ces phases d'atterrissage et de décollage au moins 50% des passagers. Il faut notamment veiller à ce que les passagers, pour leur sécurité, ne soient pas debout durant ces phases.

On remarque que tous les espaces disponibles sont prévus pour réaliser des logements accessibles chacun par une porte, un volet ou similaire. Un espace étroit fermé par une porte étroite 70 est par exemple prévu pour loger un écran (non représenté). Tous les appareils électriques rangés dans le compartiment 48 sont bien entendu alimentés électriquement et prêts à fonctionner. Dans la mesure du possible, les liaisons par fil sont supprimées. Les divers équipements, tels par exemple les écrans, sont reliés à l'appareil correspondant de préférence par la technologie connue sous le nom de Bluetooth.

Le bloc médical est également équipé d'un appareil téléphonique permettant une liaison avec le sol, plus précisément avec un centre médical spécialisé dans la télémédecine.

Le compartiment 48 peut contenir toutes sortes d'appareils médicaux. Il est inutile ici d'en dresser une liste exhaustive. On peut trouver ici tous types d'appareils de diagnostic et de traitement. Il s'agit des appareils que l'on trouve notamment dans les véhicules d'aide d'urgence (ambulances, hélicoptères, ...) ou bien même dans des salles de soin.

La description qui précède montre des formes de réalisation préférées de l'invention dans lesquelles le bloc médical selon l'invention est utilisé en combinaison avec un module destiné à recevoir un passager. Un tel module est généralement utilisé en première classe. Toutefois, l'invention peut également être mise en oeuvre dans une partie de la cabine destinée à recevoir des passagers voyageant en classe affaires ou en classe économique. On peut alors prévoir un compartiment 48 recevant un ou deux (ou plus) chariots 12 ainsi que des rangements pour recevoir des appareils médicaux et du matériel. Ce compartiment est alimenté au moins en eau et en électricité, de préférence également en oxygène et/ou en air. Lorsqu'un patient doit alors être soigné, il est allongé à proximité du bloc médical selon l'invention sur une couchette. En classe affaires, les sièges sont parfois convertibles en lit. Un siège peut alors être utilisé pour recevoir le patient. En classe économique, il est déjà connu d'adapter un brancard, ou couchette, sur une rangée de sièges. Des dispositifs de l'art antérieur de ce type peuvent être utilisés ici. On peut citer ici à titre d'exemple non limitatif une couchette pour patient telle que décrite dans le document EP-0 965 319. Pour permettre alors l'isolement du patient, il peut être prévu, en combinaison avec le bloc médical selon l'invention, un rideau et un rail monté au plafond de la cabine pour permettre d'entourer la zone destinée à recevoir le patient.

Un bloc médical tel que décrit ci-dessus prend très peu de place dans un aéronef. La place occupée par un tel bloc correspond à un volume compris entre le quart du volume d'une toilette et la moitié du volume d'une toilette. Ce bloc médical se présente donc comme une paroi transversale de grande épaisseur. Cette épaisseur peut rester inférieure à 50 cm. Il est donc possible de loger un tel bloc médical dans la plupart des aéronefs sans devoir prévoir de supprimer des sièges.

Bien entendu, il est possible de prévoir plusieurs blocs médicaux dans un aéronef. Un tel bloc médical prend de préférence place à un endroit de l'aéronef alimenté à la fois en eau et en électricité. Un tel bloc médical se trouve donc de préférence à côté d'une toilette ou d'une cuisine.

La place occupée peut être minimale grâce à l'idée originale de prévoir une zone dédiée dans l'aéronef pour recevoir le matériel médical et d'utiliser la place destinée à recevoir un patient pour recevoir un passager. Ce dernier, si personne dans l'aéronef n'a besoin de soins médicaux, ne se rend pas compte qu'il voyage dans l"'infirmerie". Si une personne tombe malade au cours d'un vol, le(s) passager(s) déplacé(s) pour permettre au patient de s'allonger vont prendre la place du patient et/ou d'autres places éventuellement libres.

Dans les formes de réalisation représentées sur les dessins, le module médical peut également être utilisé pour effectuer un rapatriement sanitaire. Il est alors possible, lorsque le module comporte l'équipement adéquat, de faire un rapatriement sanitaire en utilisant un avion de ligne plutôt que d'affréter un avion sanitaire. Cela permet d'économiser des frais à la compagnie d'assurances devant effectuer le rapatriement sanitaire et permet en parallèle à une compagnie aérienne de rentabiliser un équipement se trouvant à bord de l'un de ses aéronefs.

Lorsque le bloc médical selon l'invention n'est pas utilisé, il est important que les personnes non autorisées ne puissent accéder à ce bloc médical. En effet, celui-ci contient des médicaments et des drogues qui doivent impérativement être conservés sous clef. En outre, il ne faudrait pas que quelqu'un puisse détériorer le matériel médical qui serait alors inutilisable. Toutefois, comme il ressort de la description qui précède, un lavabo du bloc médical, un plan de travail, ou d'autres accessoires, peuvent être accessibles en permanence. Ceci permet d'augmenter le confort du(es) passager(s) voyageant à proximité du bloc médical.

Dans un bloc médical selon l'invention, il est facile de remplacer un appareil en panne, ou obsolète, sans entraîner des frais inconsidérés. Un bloc médical selon l'invention peut ainsi toujours contenir du matériel performant. Il permet ainsi de fournir un service médical de grande qualité dans un aéronef. Une intervention réalisée à bord de cet aéronef peut être faite sous contrôle d'un centre médical expert au sol grâce aux moyens de télémédecine.

Selon les souhaits de la compagnie aérienne, l'équipement du bloc médical peut être plus ou moins complet et plus ou moins perfectionné. Quelle que soit l'option choisie, le bloc médical proposé peut s'adapter à l'aéronef sans modifier la structure initiale de celui-ci.

La présente invention ne se limite pas aux formes de réalisation préférentielle décrites ci-dessus à titre d'exemples non limitatifs. Elle concerne toutes les variantes de réalisation évoquées ainsi que toutes les autres variantes de réalisation à la portée de l'homme du métier dans le cadre des revendications ci-après.

## Revendications

1. Bloc médical pour cabine d'aéronef associé à une couchette (2) destinée à recevoir un patient en position allongée, comportant :
- une alimentation en eau,
- une alimentation électrique,
**caractérisé en ce qu'**il comporte en outre :
- une zone de stationnement pour au moins un chariot (12),
- au moins un chariot (12) disposé dans la zone de stationnement et comportant des tiroirs dans lesquels se trouve du matériel médical,
- un volet d'accès (56) correspondant à un chariot (12), muni de moyens de verrouillage, et permettant l'accès aux tiroirs de ceux-ci, et
- une porte d'accès (26) distincte des volets d'accès (56), permettant de faire rentrer et sortir un chariot (12) de sa zone de stationnement.

2. Bloc médical selon la revendication 1, **caractérisé en ce que** chaque volet d'accès (56) permet l'accès aux tiroirs du chariot (12) correspondant depuis une zone destinée à recevoir des passagers.

3. Bloc médical selon la revendication 2, **caractérisé en ce qu'**il présente des moyens de retenue (52, 54) empêchant un chariot (12) de se déplacer vers la zone voisine destinée à recevoir des passagers.

4. Bloc médical selon la revendication 3, **caractérisé en ce que** les moyens de retenue pour un chariot (12) comportent un bandeau inférieur (52) et un bandeau supérieur (54) entre lesquels se trouve le volet d'accès (56) correspondant.

5. Bloc médical selon l'une des revendications 1 à 4, **caractérisé en ce que** le bloc médical est délimité d'une part par deux parois (20, 22) s'étendant transversalement dans la cabine d'aéronef et d'autre part par une paroi longitudinale (18) et une paroi de cabine (16), et **en ce que** chaque volet (56) est réalisé dans une paroi transversale (22 ; 46).

6. Bloc médical selon la revendication 5, **caractérisé en ce que** la porte d'accès (26) est réalisée dans la paroi longitudinale (18).

7. Bloc médical selon l'une des revendications 1 à 6, **caractérisé en ce qu'**il comporte un point d'eau tel un lavabo (10).

8. Bloc médical selon l'une des revendications 1 à 7, **caractérisé en ce qu'**il comporte un plan de travail (66).

9. Bloc médical selon la revendication 8, **caractérisé en ce que** le plan de travail (66) se trouve au-dessus de la zone de stationnement des chariots (12).

10. Bloc médical selon l'une des revendications 1 à 9, **caractérisé en ce qu'**il comporte également une alimentation en oxygène.

11. Bloc médical selon l'une des revendications 1 à 10, **caractérisé en ce qu'**il comporte en outre un brancard (60).

12. Bloc médical selon la revendication 11, **caractérisé en ce qu'**il comporte au moins deux chariots (12), et **en ce que** lesdits chariots (12) et le brancard (60) sont munis de moyens de fixation de telle sorte que les deux extrémités du brancard (60) puissent être fixées chacune sur un chariot (12).

13. Bloc médical selon l'une des revendications 1 à 12, **caractérisé en ce qu'**il comporte en outre des casiers de rangement (4) destinés à recevoir des appareils médicaux.

14. Bloc médical selon l'une des revendications 1 à 13, **caractérisé en ce qu'**il comporte au moins un éclairage scialytique (6).

15. Bloc médical selon l'une des revendications 1 à 14, **caractérisé en ce qu'**il comporte au moins une tablette rétractable (30).

16. Bloc médical selon l'une des revendications 1 à 15, **caractérisé en ce qu'**il comporte un appareil téléphonique ou similaire permettant d'être en contact avec un médecin au sol pour permettre de réaliser de la télémédecine.

17. Cabine d'aéronef, **caractérisée en ce qu'**elle comporte un bloc médical (48) selon l'une des revendications 1 à 16.

18. Cabine d'aéronef selon la revendication 17, **caractérisée en ce qu'**elle comporte en outre un module (36) de cabine d'aéronef de forme rectangulaire allongée avec :
- deux grandes parois reliées par deux petites parois,
- une porte montée dans une ouverture réalisée dans une paroi (18) séparant le module d'un couloir (38),
- au moins un siège (40) ayant au moins une configuration dans laquelle il est orienté longitudinalement par rapport au sens de déplacement de l'aéronef, et
- des éléments (2) pouvant former une surface de couchage pour au moins un passager,
**en ce que** le bloc médical (48) et le module (36) de cabine d'aéronef ont une paroi (46) commune, et
**en ce que** les volets d'accès (56) du bloc médical permettent l'accès aux tiroirs des chariots (12) correspondants depuis l'intérieur du module (36) de cabine.

19. Cabine d'aéronef selon la revendication 18, **caractérisée en ce que** le bloc médical (48) comporte un lavabo (10), et **en ce que** ce lavabo (14) est accessible en permanence depuis l'intérieur du module (36) de cabine.

20. Cabine d'aéronef selon l'une des revendications 18 ou 19, **caractérisée en ce que** le bloc médical (48) comporte un plan de travail (66), et **en ce que** ce plan de travail (66) est accessible en permanence depuis l'intérieur du module (36) de cabine.

21. Cabine d'aéronef selon la revendication 20, **caractérisée en ce que** le bloc médical (48) comporte une vitre (68) occultable disposée au-dessus du plan de travail (66).

22. Aéronef, **caractérisé en ce qu'**il comporte un bloc médical (48) selon l'une des revendications 1 à 16.

## Claims

1. Medical unit for an aircraft cabin associated with a berth (2) intended to accommodate a patient in lying-down position, comprising:
- a supply of water,
- a supply of electricity,
**characterized in that** it further comprises:
- a parking area for at least one trolley (12),
- at least one trolley (12) positioned in the parking area and comprising drawers in which medical materials are located, and
- an access shutter (56) corresponding to each trolley (12), equipped with locking means, and allowing access to the drawers thereof.
- an access door (26) other than the access shutters (56), making it possible to move a trolley (12) back into and out of its parking area

2. Medical unit according to claim 1, **characterized in that** each access shutter (56) allows access to the drawers of the corresponding trolley (12) from an area intended to accommodate passengers.

3. Medical unit according to claim 2, **characterized in that** it has restraining means (52, 54) preventing a trolley (12) from moving into the adjacent area intended to accommodate passengers.

4. Medical unit according to claim 3, **characterized in that** the restraining means for a trolley (12) comprise a lower band (52) and an upper band (54) between which the corresponding access shutter (56) is located.

5. Medical unit according to one of claims 1 to 4, **characterized in that** the medical unit is delimited by two walls (20, 22) extending transversely in the aircraft cabin, and by a longitudinal wall (18) and a cabin wall (16), and **in that** each shutter (56) is provided in a transverse wall (20; 46).

6. Medical unit according to claims 5, **characterized in that** the access door (26) is provided in the longitudinal wall (18).

7. Medical unit according to one of claims 1 to 6, **characterized in that** it comprises a water source such as a washbasin (10).

8. Medical unit according to one of claims 1 to 7, **characterized in that** it comprises a work surface (66).

9. Medical unit according to claim 8, **characterized in that** the work surface (66) is above the parking area for the trolleys (12).

10. Medical unit according to one of claims 1 to 9, **characterized in that** it also comprises a supply of oxygen.

11. Medical unit according to one of claims 1 to 10, **characterized in that** it further comprises a stretcher (60).

12. Medical unit according to claim 11, **characterized in that** it comprises at least two trolleys (12), and **in that** the said trolleys (12) and the stretcher (60) are equipped with fastening means such that the two ends of the stretcher (60) can each be fastened onto a trolley (12).

13. Medical unit according to one of claims 1 to 12, **characterized in that** it further comprises storage compartments (4) intended to accommodate medical apparatuses.

14. Medical unit according to one of claims 1 to 13, **characterized in that** it comprises at least one scialytic lamp (6).

15. Medical unit according to one of claims 1 to 14, **characterized in that** it comprises at least one retractable shelf (30).

16. Medical unit according to one of claims 1 to 15, **characterized in that** it comprise a telephone or similar apparatus making it possible to be in contact with a physician on the ground in order to make it possible to carry out telemedicine.

17. Aircraft cabin, **characterized in that** it comprises a medical unit (48) according to one of claims 1 to 16.

18. Aircraft cabin according to claim 17, **characterized in that** it further comprises an aircraft cabin module (36) of elongate rectangular shape with:
- two large walls connected by two small walls,
- a door mounted in an opening made in a wall (18) separating the module from a corridor (38),
- at least one seat (40) having at least one configuration in which it is positioned longitudinally in relation to the direction of travel of the aircraft, and
- components (2) that can form a bedding surface for at least one passenger,
**in that** the medical unit (48) and the aircraft cabin module (36) have a common wall (46), and
**in that** the access shutters (56) of the medical unit allow access to the drawers of the corresponding trolleys (12) from the inside of the cabin module (36).

19. Aircraft cabin according to claim 18, **characterized in that** the medical unit (48) comprises a washbasin (10), and **in that** this washbasin (10) is permanently accessible from the inside of the cabin module (36).

20. Aircraft cabin according to one of claims 18 or 19, **characterized in that** the medical unit (48) comprises a work surface (66), and **in that** this work surface (66) is permanently accessible from the inside of the cabin module (36).

21. Aircraft cabin according to claim 20, **characterized in that** the medical unit (48) comprises a window (68) which can be obscured and which is positioned above the work surface (66).

22. Aircraft, **characterized in that** it comprises a medical unit (48) according to one of claims 1 to 16.

## Patentansprüche

1. Medizinischer Block für eine Flugzeugkabine, dem eine Liege (2) zugeordnet ist, die dazu bestimmt ist, einen Patienten in liegender Haltung aufzunehmen, umfassend:
- eine Wasserversorgung,
- eine Stromversorgung,
**dadurch gekennzeichnet, dass** er außerdem umfasst:
- eine Abstellzone für mindestens einen Wagen (12),
- mindestens einen Wagen (12), der in der Abstellzone angeordnet ist und Schubladen umfasst, in denen sich medizinisches Material befindet,
- eine einem Wagen (12) entsprechende Zugangsklappe (56), die mit Verriegelungsmitteln versehen ist und den Zugang zu dessen Schubladen gestattet, und
- eine von den Zugangsklappen (56) verschiedene Zugangstür (26), die das Ein- und Ausfahren eines Wagens (12) aus seiner Abstellzone gestattet.

2. Medizinischer Block nach Anspruch 1, **dadurch gekennzeichnet, dass** jede Zugangsklappe (56) den Zugang zu den Schubladen des entsprechenden Wagens (12) von einer zur Aufnahme der Fluggäste bestimmten Zone aus gestattet.

3. Medizinischer Block nach Anspruch 2, **dadurch gekennzeichnet, dass** er Rückhaltemittel (52, 54) umfasst, die einen Wagen (12) daran hindern, sich auf die benachbarte, zur Aufnahme der Fluggäste bestimmte Zone zu zubewegen.

4. Medizinischer Block nach Anspruch 3, **dadurch gekennzeichnet, dass** die Rückhaltemittel für einen Wagen (12) eine untere Blende (52) und eine obere Blende (54) umfassen, zwischen denen sich die entsprechende Zugangsklappe (56) befindet.

5. Medizinischer Block nach einem der Ansprüche 1 bis 4, **dadurch gekennzeichnet, dass** der medizinische Block einerseits durch zwei Wände (20, 22), die sich in der Flugzeugkabine in Querrichtung erstrecken, und andererseits durch eine Längswand (18) und eine Kabinenwand (16) begrenzt ist und dass jede Klappe (56) in einer Querwand (22; 46) vorgesehen ist.

6. Medizinischer Block nach Anspruch 5, **dadurch gekennzeichnet, dass** die Zugangstür (26) in der Längswand (18) vorgesehen ist.

7. Medizinischer Block nach einem der Ansprüche 1 bis 6, **dadurch gekennzeichnet, dass** er eine Wasserstelle wie ein Waschbecken (10) umfasst.

8. Medizinischer Block nach einem der Ansprüche 1 bis 7, **dadurch gekennzeichnet, dass** er eine Arbeitsfläche (66) umfasst.

9. Medizinischer Block nach Anspruch 8, **dadurch gekennzeichnet, dass** die Arbeitsfläche (66) sich über der Abstellzone der Wagen (12) befindet.

10. Medizinischer Block nach einem der Ansprüche 1 bis 9, **dadurch gekennzeichnet, dass** er auch eine Sauerstoffversorgung umfasst.

11. Medizinischer Block nach einem der Ansprüche 1 bis 10, **dadurch gekennzeichnet, dass** er außerdem eine Tragbahre (60) umfasst.

12. Medizinischer Block nach Anspruch 11, **dadurch gekennzeichnet, dass** er mindestens zwei Wagen (12) umfasst und dass die Wagen (12) und die Tragbahre (60) mit Befestigungsmitteln versehen sind, so dass die beiden Enden der Tragbahre (60) jeweils auf einem Wagen (12) befestigt werden können.

13. Medizinischer Block nach einem der Ansprüche 1 bis 12, **dadurch gekennzeichnet, dass** er außerdem Ablagefächer (4) umfasst, die dazu bestimmt sind, medizinische Geräte aufzunehmen.

14. Medizinischer Block nach einem der Ansprüche 1 bis 13, **dadurch gekennzeichnet, dass** er mindestens eine Operationslampe (6) umfasst.

15. Medizinischer Block nach einem der Ansprüche 1 bis 14, **dadurch gekennzeichnet, dass** er mindestens ein ausziehbares Tablett (30) umfasst.

16. Medizinischer Block nach einem der Ansprüche 1 bis 15, **dadurch gekennzeichnet, dass** er ein Fernsprechgerät oder dergleichen umfasst, das es gestattet, mit einem Arzt am Boden in Kontakt zu sein, um die Durchführung von Telemedizin zu gestatten.

17. Flugzeugkabine, **dadurch gekennzeichnet, dass** sie einen medizinischen Block (48) nach einem der Ansprüche 1 bis 16 umfasst.

18. Flugzeugkabine nach Anspruch 17, **dadurch gekennzeichnet, dass** sie außerdem ein Flugzeugkabinenmodul (36) von langgestreckter rechteckiger Form umfasst mit:
- zwei großen Wänden, die durch zwei kleine Wände verbunden sind,
- einer Tür, die in einer Öffnung montiert ist, die in einer Wand (18) vorgesehen ist, die das Modul von einem Gang (38) trennt,
- mindestens einem Sitz (40), der mindestens eine Konfiguration besitzt, in der er bezüglich der Bewegungsrichtung des Flugzeugs in Längsrichtung gerichtet ist, und
- Elementen (2) die eine Liegefläche für mindestens einen Fluggast bilden können,
dass der medizinische Block (48) und das Flugzeugkabinenmodul (36) eine gemeinsame Wand (46) besitzen und
dass die Zugangsklappen (56) des medizinischen Blocks den Zugang zu den Schubladen der entsprechenden Wagen (12) vom Inneren des Kabinenmoduls (36) aus gestatten.

19. Flugzeugkabine nach Anspruch 18, **dadurch gekennzeichnet, dass** der medizinische Block (48) ein Waschbecken (10) umfasst und dass dieses Waschbecken (10) ständig vom Inneren des Kabinenmoduls (36) aus zugänglich ist.

20. Flugzeugkabine nach einem der Ansprüche 18 oder 19, **dadurch gekennzeichnet, dass** der medizinische Block (48) eine Arbeitsfläche (66) umfasst und dass diese Arbeitsfläche (66) ständig vom Inneren des Kabinenmoduls (36) aus zugänglich ist.

21. Flugzeugkabine nach Anspruch 20, **dadurch gekennzeichnet, dass** der medizinische Block (48) eine abdeckbare Fensterscheibe (68) umfasst, die über der Arbeitsfläche (66) angeordnet ist.

22. Flugzeug, **dadurch gekennzeichnet, dass** es einen medizinischen Block (48) nach einem der Ansprüche 1 bis 16 umfasst.
